# EUROPEAN PATENT APPLICATION

(11) **EP 4 852 519 A1**
(43) Date of publication of application: **09.12.2026**
(21) Application number: 25747669.7
(22) Date of filing: 21.01.2025
(51) Int. Cl.: H04W 36/00

(54) **MEASUREMENT-BASED HANDOVER METHOD AND APPARATUS, AND STORAGE MEDIUM**

(30) Priority: 04.02.2024 CN 202410159527
(71) Applicant: Datang Mobile Communications Equipment Co., Ltd., Beijing 100085 (CN)
(72) Inventor: SONG, Lei, Beijing 100085 (CN); SU, Xin, Beijing 100085 (CN)
(74) Representative: Studio Torta S.p.A.
(86) International application number: PCT/CN2025/073777
(87) International publication number: WO 2025/162097

(57) **Abstract**

The present disclosure provides a measurement-based switching method and apparatus, and a storage medium, relating to the field of communication technology. The method includes: performing measurement according to a reference signal to obtain a measurement result, where the reference signal is associated with first information, and the first information is used to identify a source of the reference signal; and sending target content, where the target content includes at least one of: the measurement result, a switching notification, or a switching request; where the switching notification includes the first information, and the switching request includes the first information. In the above solution, a terminal device directly initiates the measurement, which can improve measurement efficiency compared to the configuring or triggering method of a network device.

## Description

The present disclosure claims priority to Chinese Patent Application No. 202410159527.2, entitled "MEASUREMENT-BASED SWITCHING METHOD AND APPARATUS, AND STORAGE MEDIUM", filed with the China National Intellectual Property Administration on February 04, 2024, which is hereby incorporated by reference in its entirety.

### TECHNICAL FIELD

The present disclosure relates to the field of communication technology, and in particular, to a measurement-based switching method and apparatus, and a storage medium.

### BACKGROUND

A terminal device establishes a connection with an access device, and the access device provides a communication service for the terminal device, thereby enabling a communication service of the terminal device. The access device includes, but is not limited to, a base station or a transmitter receiver point (TRP).

In practical applications, fluctuations in the quality of the communication service provided by the access device affect the quality of the communication service of the terminal device. To ensure normal execution of the communication service of the terminal device, a network device configures or triggers the terminal device to perform measurement and report a measurement result, and performs switching of the access device connected to the terminal device according to the measurement result.

However, the configuring or triggering method of the network device suffers from the problem of low measurement efficiency.

### SUMMARY

The present disclosure provides a measurement-based switching method and apparatus, and a storage medium, which solves the technical problem of low measurement efficiency.

In a first aspect, the present disclosure provides a measurement-based switching method, applied to a terminal, and including: performing measurement according to a reference signal to obtain a measurement result, where the reference signal is associated with first information, and the first information is used to identify a source of the reference signal; and sending target content, where the target content includes at least one of: the measurement result, a switching notification, or a switching request; where the switching notification includes the first information, and the switching request includes the first information.

In this implementation, the terminal device directly initiates the measurement, which can improve measurement efficiency compared to the configuring or triggering method of a network device.

In a possible implementation, the method further includes: determining whether the measurement result satisfies a first condition; and sending the switching notification or the switching request if the measurement result satisfies the first condition; where the first condition is at least one of: a measurement metric of a target reference signal being greater than a measurement metric of a current reference signal, or the measurement metric of the target reference signal falling within a first range, or a difference between the measurement metric of the target reference signal and the measurement metric of the current reference signal falling within a second range.

In a possible implementation, the method further includes: determining a target index value according to the first information, and receiving a signal associated with the target index value; and/or, determining a target transmission mode according to second information, and receiving a signal from the source of the reference signal through the target transmission mode, where the second information is used to identify the target transmission mode.

In a possible implementation, the reference signal includes at least one of: a demodulation reference signal (DMRS) of a physical uplink shared channel (PDSCH), a channel state information reference signal (CSI-RS), or a synchronization signal block (SSB); and the method further includes: determining the first information associated with the reference signal according to a configuration of the reference signal.

In a possible implementation, a method of indicating the first information by the DMRS of the PDSCH includes at least one of: indicating the first information by a sequence configured through a higher-layer parameter; indicating the first information by downlink control information (DCI); or indicating the first information by a beam state of the DMRS of the PDSCH.

In a possible implementation, the method further includes: determining a first set, where the first set includes a plurality of reference signals; and performing measurement on the plurality of reference signals in the first set, respectively, to determine a target reference signal.

In a possible implementation, the performing measurement according to the reference signal to obtain the measurement result includes: performing measurement according to the reference signal within a target time window to obtain the measurement result.

In this implementation, since the reference signal changes dynamically, measuring the reference signal within a certain time window avoids the problem of low accuracy of the measurement result caused by excessive variation of the reference signal.

In a possible implementation, the performing measurement according to the reference signal to obtain the measurement result includes: determining a power offset value; and performing measurement according to the reference signal and the power offset value to obtain the measurement result.

In this implementation, the measurement result is corrected by using the offset value, improving the accuracy of the measurement result.

In a possible implementation, the switching notification or the switching request further includes second information, the second information being used to identify a target transmission mode, and the second information includes at least one of: the target transmission mode; a correspondence between the target transmission mode and the number of streams; a correspondence between a target index value and the number of streams; or a correspondence between the target index value and the target transmission mode.

In a possible implementation, the first information includes at least one of: a current index value or the target index value, the current index value being used to identify a source of the current reference signal, and the target index value being used to identify a source of the target reference signal.

In a possible implementation, the target transmission mode includes at least one of: coherent joint transmission (CJT), space division multiplexing transmission (SDM), time division multiplexing transmission (TDM), frequency division multiplexing transmission (FDM), single frequency network transmission (SFN), or dynamic point selection (DPS).

In a second aspect, the present disclosure provides a measurement-based switching method, applied to a network device, and including: receiving target content, where the target content includes at least one of: a measurement result, a switching notification, or a switching request.

In a possible implementation, the switching notification includes first information and/or second information; and the method further includes: determining a target access device associated with the target index value according to the first information and/or the second information; and sending the switching notification to the target access device.

In a possible implementation, the first information includes at least one of the following: a current index value or the target index value, the current index value being used to identify a source of the current reference signal, and the target index value being used to identify a source of the target reference signal; and the second information includes a current transmission mode and at least one of the following: a target transmission mode; a correspondence between the target transmission mode and the number of streams; a correspondence between the target index value and the number of streams; or a correspondence between the target index value and the target transmission mode.

In a possible implementation, the method further includes: determining a first access device associated with the target transmission mode; and sending the switching notification to the first access device.

In a possible implementation, the switching request includes first information and/or second information; and the method further includes: determining a target access device associated with the target index value according to the first information and/or the second information; and performing switching.

In a possible implementation, the method further includes: determining a first access device associated with a target transmission mode; and performing switching to execute a communication service for a terminal device via the target transmission mode.

In a possible implementation, the target transmission mode includes at least one of: coherent joint transmission (CJT), space division multiplexing transmission (SDM), time division multiplexing transmission (TDM), frequency division multiplexing transmission (FDM), single frequency network transmission (SFN), or dynamic point selection (DPS).

In a possible implementation, the method further includes: sending response information, where the response information indicates that the network device has received the measurement result.

In a possible implementation, the method further includes: sending response information via signaling, where the signaling includes at least one of: acknowledgment (ACK) signaling, medium access control-control element (MAC-CE) signaling, or downlink control information (DCI) signaling.

In a possible implementation, the method further includes: sending a power offset value, where the power offset value is used to correct a measurement error.

In a third aspect, the present disclosure provides a measurement-based switching apparatus, applied to a terminal, and including: a measurement module, configured to perform measurement according to a reference signal to obtain a measurement result, where the reference signal is associated with first information, and the first information is used to identify a source of the reference signal; and a determination module, configured to send target content, where the target content includes at least one of: the measurement result, a switching notification, or a switching request; where the switching notification includes the first information, and the switching request includes the first information.

In a fourth aspect, the present disclosure provides a measurement-based switching apparatus applied to a network device, including: a second receiving module, configured to receive target content, where the target content includes at least one of: a measurement result, a switching notification, or a switching request.

In a fifth aspect, the present disclosure provides a measurement-based switching apparatus including: a memory, a transceiver, and a processor: where the memory is configured to store a computer program; the transceiver is configured to receive and send data under control of the processor; and the processor is configured to read the computer program from the memory and execute following operations: performing measurement according to a reference signal to obtain a measurement result, where the reference signal is associated with first information, and the first information is used to identify a source of the reference signal; and sending target content, where the target content includes at least one of: the measurement result, a switching notification, or a switching request; where the switching notification includes the first information, and the switching request includes the first information.

In a possible implementation, the processor is configured to: determine whether the measurement result satisfies a first condition; and send the switching notification or the switching request if the measurement result satisfies the first condition.

In a possible implementation, the processor is configured to: determine a target index value according to the first information and receive a signal associated with the target index value; and/or, determine a target transmission mode according to second information, and receive a signal from a source of the reference signal through the target transmission mode, where the second information is used to identify the target transmission mode.

In a sixth aspect, the present disclosure provides a measurement-based switching apparatus including a memory, a transceiver, and a processor: where the memory is configured to store a computer program; the transceiver is configured to receive and send data under control of the processor; and the processor is configured to read the computer program from the memory and execute following operations: receiving a switching notification or a switching request.

In a seventh aspect, the present disclosure provides a processor-readable storage medium storing a computer program, where the computer program is used to cause a processor to execute the method according to any one of the first aspect.

In an eighth aspect, the present disclosure provides a computer program product including a computer program executed by a processor to perform the method according to any one of the first aspect.

The present disclosure provides a measurement-based switching method and apparatus, and a storage medium. The method includes: performing measurement according to a reference signal to obtain a measurement result, where the reference signal is associated with first information, and the first information is used to identify a source of the reference signal; and sending target content, where the target content includes at least one of: the measurement result, a switching notification, or a switching request; where the switching notification includes the first information, and the switching request includes the first information. In the above solution, a terminal device directly initiates the measurement, which can improve measurement efficiency compared to the configuring or triggering method of a network device. It should be understood that the content described in the above summary section is not intended to limit the key or important features of embodiments of the present disclosure, nor to limit the scope of the disclosure. Other features of the present disclosure will be readily understood from the following description.

### BRIEF DESCRIPTION OF DRAWINGS

To more clearly illustrate technical solutions of the present disclosure or the related art, the drawings required for describing the embodiments or the related art are briefly introduced below. Apparently, the drawings described below illustrate some embodiments of the present disclosure. For the persons of ordinary skill in the art, another drawing can be derived from these drawings without paying creative efforts.
FIG. 1 is a schematic diagram of an application scenario of a measurement-based switching method provided by an embodiment of the present disclosure.
FIG. 2 is a flowchart of a measurement-based switching method provided by an embodiment of the present disclosure.
FIG. 3 is a schematic diagram of measurement reporting provided by an embodiment of the present disclosure.
FIG. 4 is a schematic diagram of measurement reporting provided by an embodiment of the present disclosure.
FIG. 5 is a schematic diagram of switching notification provided by an embodiment of the present disclosure.
FIG. 6 is a structural schematic diagram of a measurement-based switching apparatus provided by an embodiment of the present disclosure.
FIG. 7 is a structural schematic diagram of a measurement-based switching apparatus provided by an embodiment of the present disclosure.
FIG. 8 is a structural schematic diagram of a measurement-based switching apparatus provided by an embodiment of the present disclosure.
FIG. 9 is a structural schematic diagram of a measurement-based switching apparatus provided by an embodiment of the present disclosure.

### DESCRIPTION OF EMBODIMENTS

In the embodiments of the present disclosure, the term "and/or" describes an association relationship between associated objects, indicating that there may be three types of relationships. For example, A and/or B may represent: A alone, both A and B, or B alone. The character "/" generally indicates an "or" relationship between the associated objects before and after the character.

In the embodiments of the present disclosure, the term "a plurality of" refers to two or more, and other quantifiers are construed similarly.

The technical solutions in the embodiments of the present disclosure will be clearly and completely described below with reference to the drawings in the embodiments of the present disclosure. Apparently, the described embodiments are merely a part of the embodiments of the present disclosure, rather than all the embodiments. All other embodiments obtained by the persons of ordinary skilled in the art based on the embodiments of the present disclosure without making creative efforts shall fall within the protection scope of the present disclosure.

Terms involved in the embodiments of the present disclosure are briefly described below.

Transmitter receiver point (Transmitter Receiver Point, abbreviated as TRP): an integrated set of wireless transmitters and receivers, configured to transmit and receive wireless signals. Such signals may be information such as voice, images, and data. The adoption of TRP enables coverage and signal transmission of a wireless communication system, to provide reliable communication services in different locations and environments.

Coherent joint transmission (Correlated Joint Transmission, abbreviated as CJT): performing signal processing and transmission by integrating frequency-domain or time-domain information of multiple signals. This transmission mode can fully utilize the correlation between signals, improve the quality and reliability of signal transmission.

Non-coherent joint transmission (Uncorrelated Joint Transmission, abbreviated as NCJT): performing processing and transmission of multiple signals independently, without considering the correlation among the signals. This transmission mode can reduce the complexity of signal processing, and is applicable for scenarios where the correlation among signals is relatively weak.

Dynamic point selection (Dynamic Point Selection): a downlink coordinated multi-point technology, used to dynamically switch the serving data transmission point for user equipment within a collaborative transmission point set of a terminal device.

Acknowledgment (Acknowledge, abbreviated as ACK) signaling: used to acknowledge that a previously transmitted request has been successfully processed.

Media access control-control element (Media Access Control Element-Control Element, abbreviated as MAC-CE) signaling: describing a media access control protocol data unit for wireless communication. It coordinates the occupancy of shared transmission media by multiple transmitting and receiving stations, and ensures the reliability and efficiency of data transmission. The adoption of the MAC-CE signaling enables flexible media access control strategies to meet the requirements of different application scenarios.

Downlink control information (Downlink Control Information, abbreviated as DCI) signaling: a signal used for transmitting downlink control information. The DCI signaling is used to indicate transmission scheduling information of downlink data, downlink channel state information, and other downlink control information.

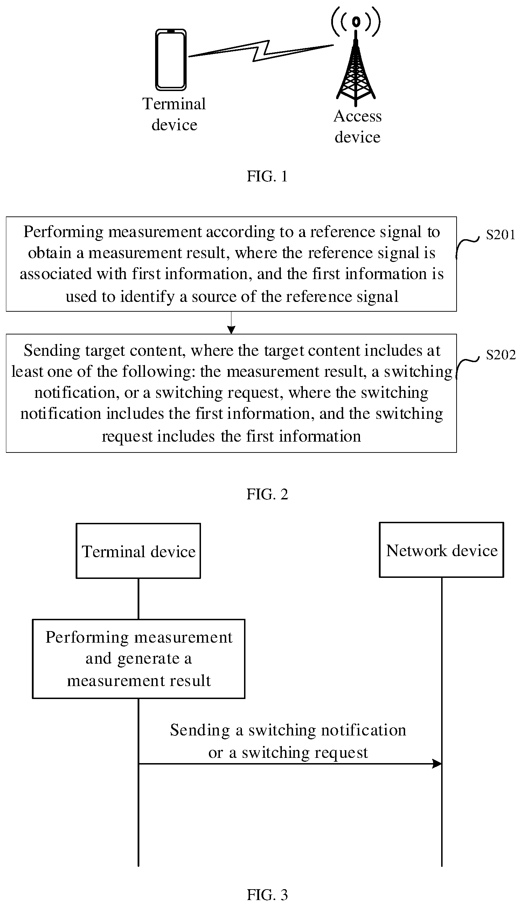

An application scenario of an embodiment of the present disclosure is described below with reference to FIG. 1.

FIG. 1 is a schematic diagram of the application scenario provided by the embodiment of the present disclosure. As shown in FIG. 1, this scenario includes: a terminal device and an access device. The terminal device is connected to the access device, and the access device provides a communication service to implement a communication service of the terminal device.

In the related art, a network device configures or triggers a terminal device to perform measurement. After receiving a configuration or an instruction from the network device, the terminal device begins to perform measurement.

However, this method has the following issues: the generation of the configuration or the instruction by the network device and the reception of the configuration or the instruction by the terminal device result in a delay in the measurement of the terminal device, thereby resulting in low measurement efficiency.

In the embodiments of the present disclosure, the terminal device may also be referred to as: user equipment (user equipment, UE), a mobile station (mobile station, MS), a mobile terminal (mobile terminal, MT), an access terminal, a user unit, a user station, a mobile station, a mobile node, a remote station, a remote terminal, a mobile device, a user terminal, a terminal, a wireless communication device, a user agent or a user apparatus, etc.

The terminal device may be a device that provides voice/data connectivity to users, such as a handheld device or in-vehicle device with wireless connection capabilities. At present, examples of some terminal devices include a mobile phone (mobile phone), a tablet, a laptop, a palmtop, a mobile internet device (mobile internet device, MID), a wearable device, a virtual reality (virtual reality, VR) device, an augmented reality (augmented reality, AR) device, a wireless terminal for industrial control (industrial control), a wireless terminal for self driving (self driving), a wireless terminal for remote medical surgery (remote medical surgery), a wireless terminal for smart grid (smart grid), and a wireless terminal for transportation security (transportation security), a wireless terminal for smart city, a wireless terminal for smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, or another processing device connected to a wireless modem, an in-vehicle device, a wearable device, a terminal device in a 5G network, or a terminal device in an future evolved public land mobile network (public land mobile network, PLMN). The present disclosure imposes no limitation in this regard.

By way of example and not limitation, in the present disclosure, the terminal device may be a terminal device in an internet of things (internet of things, IoT) system. The internet of things is an important part of the future development of information technology, and its main technical feature is to connect objects to a network through the communication technology, thereby forming an intelligent network realizing human-machine interconnection and thing-to-thing interconnection. For example, the terminal device in the embodiments of the present disclosure may be a wearable device. The wearable device, also referred to as a wearable smart device, is a general term for wearable devices intelligently designed and developed for daily wear by adopting wearable technologies, such as glasses, gloves, a watch, clothing, and shoes. The wearable device is a portable device that may be worn directly on a body or integrated into clothing or an accessory of a user. The wearable device is not merely a hardware device, it can also implement powerful functions through software support, data interaction and cloud interaction. Broadly defined wearable smart devices include those with complete functions and relatively large sizes that can implement all or part of functions independently of a smartphone, such as a smart watch and smart glasses, as well as those dedicated to a certain type of application functions that need to be used in cooperation with another device such as a smartphone, for example, various smart bracelets and smart ornaments for physical sign monitoring.

By way of example and not limitation, in the embodiments of the present disclosure, the terminal device may also be a terminal device in machine type communication (machine type communication, MTC). In addition, the terminal device may also be an in-vehicle module, an in-vehicle assembly, an in-vehicle component, an in-vehicle chip, or an in-vehicle unit, etc., embedded into a vehicle as one or more components or units. The vehicle can implement the method provided in the present disclosure through the embedded in-vehicle module, the in-vehicle assembly, the in-vehicle component, the in-vehicle chip, or the in-vehicle unit. Therefore, the embodiments of the present disclosure can also be applied to the internet of vehicles, such as vehicle to everything (vehicle to everything, V2X), long term evolution-vehicle (long term evolution-vehicle, LTE-V), and vehicle-to-vehicle (vehicle-to-vehicle, V2V) technologies.

In the embodiments of the present disclosure, the terminal device sending relevant information to a network device or similar descriptions merely mean that the terminal device sends the relevant information via a wireless signal, where an intended recipient thereof is the network device, and the network device can obtain the relevant information by receiving the wireless signal.

The network device involved in the embodiments of the present disclosure may be a base station, which may include multiple cells providing services for terminals. Depending on a specific application scenario, the base station may also be referred to as an access point, or may be a device in an access network that communicates with wireless terminal devices through one or more sectors over an air interface, or go by other names. The network device may be configured to mutually convert received air frames into Internet protocol (Internet Protocol, IP) packets, and serve as a router between wireless terminal devices and the rest of the access network, where the rest of the access network may include an Internet protocol (IP) communication network. The network device may also coordinate attribute management of the air interface. For example, the network device involved in the embodiment of the present disclosure may be an evolved network device (evolutional Node B, eNB or e-NodeB) in a long term evolution (LTE) system, a 5G base station (gNB) in a 5G network architecture (next generation system), etc., or a home evolved base station (Home evolved Node B, HeNB), a relay node (relay node), a home base station (femto), a pico base station (pico), a network test device, etc., which is not limited in the embodiments of the present disclosure. In some network architectures, the network device may include a centralized unit (centralized unit, CU) node and a distributed unit (distributed unit, DU) node, and the CU and the DU may be deployed separately in geography.

The technical solutions of the present disclosure as well as the technical solutions of the present disclosure will be described in detail below with reference to specific embodiments. The following specific embodiments may be combined with each other, and descriptions of the same or similar concepts or processes may not be repeated in some embodiments. In the description of the present disclosure, unless otherwise expressly specified and limited, each term shall be construed broadly within the art. The embodiments of the present disclosure will be described below with reference to the drawings.

FIG. 2 is a flowchart of a measurement-based switching method provided by an embodiment of the present disclosure. The method includes the following steps.

S201, performing measurement according to a reference signal to obtain a measurement result, where the reference signal is associated with first information, and the first information is used to identify a source of the reference signal.

The reference signal is used for channel estimation or channel detection, and the number of the reference signal is at least one. The reference signal originates from a network device. The measurement result indicates signal quality of the reference signal or link quality of a corresponding channel.

In some embodiments, a method for a terminal device to initiate the measurement may include: performing measurement periodically, starting measurement when it is detected that communication service quality fails to meet a requirement, or starting measurement when it is predicted that communication service quality will fail to meet a requirement in the future.

As an example in this scenario, the terminal device sets a measurement frequency and performs measurement periodically according to the measurement frequency;
the terminal device starts measurement when detecting that current communication service quality is insufficient to implement a communication service or the communication service is interrupted; or
the terminal device predicts future communication service quality according to a factor such as a movement rule, for example, movement of the terminal device may cause the terminal device to move out of the coverage area of a serving cell, and the terminal device performs measurement before moving out of the coverage area of the serving cell, to avoid interruption of the communication service.

It should be noted that the type of the reference signal includes but is not limited to: a demodulation reference signal (Demodulation Reference Signal, abbreviated as DMRS) of a current serving physical downlink shared channel (Physical Downlink Shared Channel, abbreviated as PDSCH), a reference signal associated with a current serving beam, a CSI-RS, an aperiodic CSI-RS and a semi persistent CSI-RS, or a synchronization signal block (Synchronization Signal Block, abbreviated as SSB).

In a feasible implementation, the performing measurement according to the reference signal to obtain the measurement result includes: performing measurement according to the reference signal within a target time window to obtain the measurement result.

As an example in this scenario, the terminal device measures a reference signal within a certain time window or a time range. For example, a reference signal which is spaced by S symbols, time slots, or other time units from a scheduled PDSCH (or PDSCH DMRS) may be a reference signal within S time units before the PDSCH (or the PDSCH DMRS), or S time units after the PDSCH (or the PDSCH DMRS).

In this feasible implementation, since the reference signal changes dynamically, measuring the reference signal within the certain time window avoids the problem of the low accuracy of the measurement result caused by excessive variation of the reference signal.

In a feasible implementation, the performing measurement according to the reference signal to obtain the measurement result includes: determining a power offset value; and performing measurement according to the reference signal and the power offset value to obtain the measurement result.

The power offset value is sent by the network device to the terminal device.

As an example in this scenario, the network device configures, for the terminal device, power offsets between respective reference signals and a specific reference signal (such as a PDSCH DMRS), so that the terminal can eliminate the impact of transmit power. For example, a transmit power of a certain periodic channel state information reference signal (Channel State Information Reference Signal, abbreviated as CSI-RS) is K times (such as XdB) a transmit power of the PDSCH DMRS, the terminal device, when comparing a signal to interference plus noise ratio (Signal to Interference plus Noise Ratio, abbreviated as SINR) of the PDSCH DMRS and that of the CSI-RS, needs to subtract XdB from the SINR corresponding to the CSI-RS, and then compares it with the SINR of the PDSCH DMRS, to determine which reference signal corresponds to a better SINR.

In the feasible implementation, the measurement result is corrected by using the offset value, improving the accuracy of the measurement result.

S202, sending target content, where the target content includes at least one of the following: the measurement result, a switching notification, or a switching request, where the switching notification includes the first information, and the switching request includes the first information.

The present disclosure is illustrated by taking a TRP switching scenario as an example, and the specific switching scenario is not limited in the present disclosure. The switching notification or the switching request is sent to the network device, and the network device may be configured to perform switching or notify a target TRP for switching.

In a feasible implementation, the method further includes: determining whether the measurement result satisfies a first condition; and sending the switching notification or the switching request if the measurement result satisfies the first condition; where the first condition is at least one of the following: a measurement metric of a target reference signal being greater than a measurement metric of a current reference signal, or the measurement metric of the target reference signal falling within a first range, or a difference between the measurement metric of the target reference signal and the measurement metric of the current reference signal falling within a second range.

As an example in this scenario, if signal quality of another TRP is better than that of one or more TRPs in a current TRP set, it is necessary to send the switching notification or the switching request to ensure normal execution of the communication service of the terminal device.

In some embodiments, the first condition is at least one of the following: the measurement metric of the target reference signal being greater than the measurement metric of the current reference signal, or the measurement metric of the target reference signal falling within the first range, or the difference between the measurement metric of the target reference signal and the measurement metric of the current reference signal falling within the second range.

It should be noted that a measurement metric includes but is not limited to: a reference signal received power (Physical layer Radio Signal Received Power, abbreviated as L1-RSRP), an SINR, a channel quality indicator (Channel Quality Indicator, abbreviated as CQI), or (Signal to Leakage plus Noise Ratio, abbreviated as SLNR).

Various determining methods for the first condition are exemplified below.

For example, there exists at least one target reference signal whose quality of measurement metric exceeds a preset value.

As an example in this scenario, if there exists a target reference signal whose measurement metric exceeds the preset value, it indicates that a TRP corresponding to the target reference signal can provide high-quality communication service quality.

For example, there exists at least one target reference signal whose measurement metric is better than a measurement metric corresponding to a current PDSCH DMRS or a reference signal associated with a current transmission configuration indication (Transmission Configuration Indication, abbreviated as TCI) state of the terminal device.

As an example in this scenario, if the measurement metric of the target reference signal is better than that of the current reference signal, performing TRP switching can improve the communication service quality.

For example, there exists at least one target reference signal whose measurement metric differs from the measurement metric corresponding to the current PDSCH DMRS or the reference signal associated with the current TCI state of the terminal device by more than a preset value.

As an example in this scenario, if the measurement metric of the target reference signal is better than that of the current reference signal, performing TRP switching can improve the communication service quality compared with the current communication service.

For example, there exist multiple target reference signals whose joint measurement metric is better than the measurement metric corresponding to the current PDSCH DMRS or the reference signal associated with the current TCI state of the terminal device.

As an example in this scenario, if the joint measurement metric of the multiple target reference signals is better than the measurement metric of the current reference signal, switching is performed to allow TRPs corresponding to the multiple target reference signals to provide communication services simultaneously.

For example, there exists multiple target reference signals whose joint measurement metric differs from the measurement metric corresponding to the current PDSCH DMRS or the reference signal associated with the current TCI state of the terminal device by more than a preset value.

As an example in this scenario, if the difference between the joint measurement metric of the multiple target reference signals and the measurement metric of the current reference signal is greater than the preset value, it indicates that the quality of the communication services simultaneously provided by the TRPs corresponding to the multiple target reference signals is significantly improved compared with the current service quality.

It should be noted that the determining method for the first condition is not limited in the present disclosure.

In this feasible implementation, multiple determining methods for the first condition are adopted to determine whether to perform switching from multiple dimensions, thereby improving the accuracy of the determination.

Measurement reporting will be described below with reference to FIG. 3.

FIG. 3 is a schematic diagram of measurement reporting provided by an embodiment of the present disclosure. As shown in FIG. 3, the terminal device directly initiates measurement and generates the measurement result, and sends the switching notification or the switching request to the network device. It can be understood that the terminal device directly initiating measurement can perform measurement immediately, thereby improving the measurement efficiency.

In some embodiments, sending the switching notification or the switching request according to the first information and/or second information includes: performing switching according to the first information and/or the second information, and sending the switching notification, where the switching notification includes the first information and/or the second information; alternatively, sending the switching request, where the switching request includes the first information and/or the second information.

As an example in this scenario, after the measurement result is determined, whether to perform switching is determined according to the capability of the terminal device. If the terminal device has the switching capability, the terminal device performs switching. If the terminal device does not have the switching capability, the terminal device sends the switching request to the network device, so that the network device performs switching.

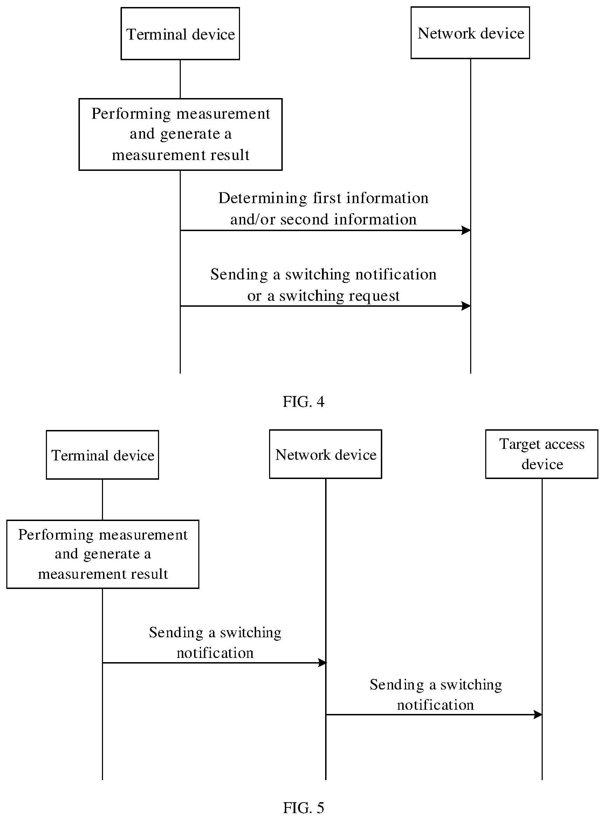

The measurement reporting is described below with reference to FIG. 4.

FIG. 4 is a schematic diagram of measurement reporting provided by an embodiment of the present disclosure. As shown in FIG. 4, on the basis of FIG. 3, the terminal device determines the first information and/or the second information, and sends the switching notification or the switching request to the network device according to the first information and/or the second information.

Specifically, in a feasible implementation, the first information includes at least one of the following: a current index value or a target index value, the current index value being used to identify a source of the current reference signal, and the target index value is used to identify a source of the target reference signal.

The determining whether the measurement result satisfies the first condition is used to decide whether to send the switching notification or the switching request. The second information is information related to switching.

Index values are in a one-to-one correspondence with TRPs. Serving as identifiers of the TRPs, the index values are used to determine any TRP from a plurality of TRPs. Each target reference signal uniquely corresponds to one target index value. The number of streams refers to the number of communication channels used during data transmission, which determines the capability of processing and transmitting data simultaneously. A larger number of streams allows a greater amount of data to be processed and transmitted simultaneously, and higher transmission speed and processing efficiency.

As an example in this scenario, the target index value is an index value corresponding to a target TRP, and a communication service of the target TRP is superior to the current communication service. The current index value is an index value corresponding to a current TRP. The quality of a communication service transmitted in a target transmission mode is better than a current transmission method. For the correspondence between the target transmission mode and the number of streams, for example, 1 to 4 streams correspond to one target transmission mode, and 5 to 8 streams correspond to another target transmission mode. For the correspondence between the target index value and the number of streams, for example, 1 to 4 streams are transmitted through TRPs corresponding to index values 2 and 3, and 5 to 8 streams are transmitted through a TRP corresponding to index value 3, where the index values 2 and 3 are the target index values. For the correspondence between the target index value and the target transmission mode, for example, when transmission is performed through TRPs corresponding to index value 1 and index value 4, the adopted transmission mode is target transmission mode 1, where the index value 1 and the index value 4 are target index values.

Specifically, in a feasible implementation, the reference signal includes at least one of the following: a demodulation reference signal (DMRS) of a physical uplink shared channel (PDSCH), a channel state information reference signal (CSI-RS), or a synchronization signal block (SSB). The method further includes: determining the first information associated with the reference signal according to a configuration of the reference signal.

As an example in this scenario, the terminal device obtains an index value through signaling.

In a feasible implementation, a method of indicating the first information by the DMRS of the PDSCH includes at least one of the following: indicating the first information by a sequence configured by a higher-layer parameter; indicating the first information through downlink control information (DCI); or indicating the first information by a beam state of the DMRS of the PDSCH.

For example, the sequence configured by the higher-layer parameter carries an index value. When the DMRS of the PDSCH is configured, one antenna port or one code division multiplexing (Code Division Multiplexing, abbreviated as CDM) group or an antenna port of the DMRS may be configured with one sequence initialization parameter, and each parameter may be associated with one index value.

For example, an index value is dynamically indicated in DCI signaling. Different from higher-layer parameter configuration, an index value associated with each DMRS port or a CDM group of the DMRS may be dynamically changed through DCI signaling. For example, a new DCI information field may be used to indicate an index value associated with each CDM group. For example, an antenna port indication field indicates a total of two CDM groups, and an index value indication field indicates that the two indicated CDM groups are associated with index value 3 and index value 2, respectively. The antenna port indication field and the index value indication field need to be interpreted jointly, and the two information fields may also be encoded jointly.

For example, an index value is associated in the beam state of the DMRS of the PDSCH. Since it is necessary to indicate a corresponding beam (such as a TCI state or other beam indication methods) for the DMRS of the PDSCH, the index value corresponding to the DMRS of the PDSCH may be changed through beam indication. For example, each TCI state is associated with one index value (associated through higher-layer parameter configuration). Alternatively, while a TCI state is indicated, the same information field or another information field is further used to indicate index values respectively corresponding to one or more TCI states.

For example, a combination of the foregoing multiple methods may also be adopted. For example, when the DMRS of the PDSCH is configured, one antenna port or one CDM group of DMRS may be configured with one sequence initialization parameter, and each parameter may be associated with one index value. Then, the network device indicates one sequence initialization parameter thereof through DCI signaling, which is equivalent to indicating one index value.

Specifically, in a feasible implementation, the target transmission mode includes at least one of the followings: coherent joint transmission (CJT), space division multiplexing transmission (SDM), time division multiplexing transmission (TDM), frequency division multiplexing transmission (FDM), single frequency network transmission (SFN), or dynamic point selection (DPS).

For a scenario involving multiple target TRPs, a cooperative transmission mode of the multiple target TRPs is determined according to the target transmission mode.

In this feasible implementation, the design of multiple target transmission modes enables the determination of a transmission mode with better communication quality.

In a feasible implementation, the measurement-based switching method further includes: determining a first set, where the first set includes a plurality of reference signals; and performing measurement on the plurality of reference signals in the first set, respectively, to determine a target reference signal.

In some embodiments, an index value is an absolute index value or a relative index value.

The absolute index value is obtained by uniformly numbering all TRPs, and the relative index value is obtained by numbering TRPs corresponding to reference signals receivable by the terminal device or a reference signal set configured for the terminal by the network device. It can be understood that the absolute index value refers to all TRPs, involving a large number of TRPs. In order to ensure the uniqueness of the index value, it is necessary to increase the number of digits of the index value, which correspondingly increases the bit overhead of the absolute index value. Similarly, using the relative index value can reduce the bit overhead. For example, for a same TRP, a relative index value is 1 and an absolute index value is 192. It can be understood that the relative index value can reduce the bit overhead.

As an example in this scenario, at least one reference signal is measured to obtain the measurement result. Index values corresponding to the reference signals form the first set. An index value is associated with a reference signal; an index value is associated with a TRP; and each reference signal is associated with at least one index value in the first set. In addition, each port of each reference signal may be associated with one index value in the first set. If there exists a target reference signal in the measurement result, an index value corresponding to the target reference signal forms a second set, and a TRP corresponding to the index value corresponding to the target reference signal is a target TRP. For example, the first set consisting of the index values for the reference signals used for measurement is {0, 2, 3, 5, 8, 10}, and the second set is within the range of the first set, and may be {0, 2, 8}.

In a feasible implementation, the switching method further includes: determining a target index value according to the first information, and receiving a signal associated with the target index value.

In another feasible implementation, the switching notification or the switching request further includes second information, the second information being used to identify a target transmission mode, and the second information includes at least one of the following: the target transmission mode; a correspondence between the target transmission mode and the number of streams; a correspondence between the target index value and the number of streams; or a correspondence between the target index value and the target transmission mode.

In some embodiments, performing switching according to the first information and performing switching according to the second information may be performed simultaneously, or only one of them may be performed.

As an example in scenarios, in scenario I, the communication service quality of a current TRP of the terminal device is insufficient to implement the communication service of the terminal device. It is only necessary to switch to a target TRP corresponding to a target index value received by the terminal device, and the communication service of the terminal device can be implemented. In scenario II, a current transmission mode of the terminal device is insufficient to implement the communication service of the terminal device. It is only necessary to switch the current transmission mode of the current TRP to the target transmission mode without switching the current TRP, and the communication service of the terminal device can be implemented. In scenario III, neither the current TRP nor the current transmission mode of the terminal device can support the communication service of the terminal device. Switching only the current TRP or only the current transmission mode still fails to implement the communication service of the terminal device. In this case, both the current TRP and the target transmission mode need to be switched.

In this feasible implementation, different switching modes are designed and a corresponding switching mode is executed according to an actual scenario, thereby effectively implementing the communication service of the terminal device.

In a feasible implementation, the network device receives the switching notification, determines a target access device associated with the target index value according to the first information and/or the second information, and sends the switching notification to the target access device.

The switching notification is described below with reference to FIG. 5.

FIG. 5 is a schematic diagram of switching notification provided by an embodiment of the present disclosure. As shown in FIG. 5, the terminal device directly initiates measurement and generates a measurement result, and sends a switching notification to the network device. The terminal device determines a target access device according to the switching notification, and sends the switching notification to the target access device to assist the terminal device in completing switching.

In another feasible implementation, the network device receives a switching request, determines a target access device associated with a target index value according to first information and/or second information, and performs switching.

As an example in this scenario, for a scenario where the terminal device does not have the switching capability, the network device performs TRP switching according to the switching request, and sends a switching result to the terminal device.

In another feasible implementation, the network device sends response information, where the response information indicates that the network device has received the measurement result.

In some embodiments, a method of sending the corresponding information includes but is not limited to at least one of the following: sending an ACK; sending a response MAC-CE including specific information, such as a replaced index value or a preset process number of a hybrid automatic repeat request error correction protocol (Hybrid Automatic Repeat Request, abbreviated as HARQ); sending DCI signaling scrambled with a specific radio network temporary identifier (Radio Network Temporary Identifier, abbreviated as RNTI); sending DCI signaling in a specific search space (or a control resource set); or scheduling PUSCH for transmission by using the same HARQ process number as that used by the terminal device for sending a notification/request, but with a new data indicator field flipped.

In some embodiments, if the network device fails to perform data transmission, corresponding feedback information is sent to the terminal device.

In this feasible implementation, the network device sends the response message to enable the terminal device to confirm that the network device has received the measurement result, thereby preventing the terminal device from waiting for a long time and affecting other functions of the terminal device.

An example of the overall scheme for measurement-based switching is described as follows.

Step 1: measuring, according to reference signals, a link quality of a channel corresponding to a current TRP and link qualities of channels corresponding to other TRPs. For example, the terminal device may measure reference signals sent by up to N TRPs, where the N TPRs may be serving TRPs or non-serving TRPs. In addition, the N TRPs may belong to a same cell or different cells. The N TRPs may be determined by the terminal device. For instance, the terminal device performs preliminary measurement according to SSBs transmitted by multiple TRPs to determine the N TRPs. The N TRPs may also be determined by the network device. For example, the network device configures N TRPs suitable for serving or measurement for the terminal device according a specific location of the terminal device. In order to ensure that the terminal device can measure both serving TRPs and non-serving TRPs, and measurement results can be used for TRP switching decision-making, all downlink reference signals are associated with TRP index values, cell index values, or resource index values. For example, a TRP index value, a cell index value, or a resource index value is configured for each SSB, CSI-RS, TRS, PDSCH DMRS, PDCCH DMRS, or PBCH DMRS. Since downlink signals are sent by the network device, a correspondence between a downlink reference signal and a TRP or a cell is determined by the network device.

Specifically, the terminal device measures reference signals associated with the index values in the first set to determine an index value used for transmission (i.e., to determine the second set). Index values included in the first set and the second set may be absolute index values or relative index values. The index values in the first set and the second set are configured by the network device or updated by the terminal device. After the first set is determined, all the reference signals are associated with at least one index value in the first set. For example, the terminal device may at least measure an SSB resource sent by a TRP in the first set.

For example, the TRP index value, the SSB index value, or the resource index value may be a relative index value or an absolute index value, which is not limited in the present disclosure. When the TRP index value is a relative index value, the configuration or indication overhead of the TRP index value or the cell index value can be reduced. However, when the first set changes, the network device should update the first set for the terminal device, or the terminal device should indicate a new first set to the network device.

Specifically, the network device or the terminal device indicates an absolute index value corresponding to a relative cell index value, a relative TRP index value, or a relative resource index value in the first set. For example, when N=4, relative index values in the first set are as follows:

| Relative index value | Absolute index value (such as a physical cell ID, a TRP ID, etc.) |
|---|---|
| Index value 0 | 234 |
| Index value 1 | 192 |
| Index value 2 | 75 |
| Index value 3 | 3 |

For another example, the network device or the terminal device only indicates to the other side an absolute index value corresponding to a relative cell index value, a relative TRP index value, or a relative resource index value which has been changed in the first set. For example, when N=4, a changed relative index value in the first set is as follows:

| Relative index value | Absolute index value (such as a physical cell ID, a TRP ID, etc.) |
|---|---|
| Index value 2 | 45 |

After a measurement set is determined, all reference signals are associated with at least one index value in the measurement set. For example, the terminal device may at least measure an SSB resource sent by a TRP in the measurement set. In some embodiments, the terminal device may also measure a CSI-RS sent by a TRP in the measurement set.

In addition, a current serving cell or a serving TRP forms a second set, and the second set is a subset of the first set and includes part of the index values from the first set. For example, the index values included in the first set are {0, 2, 3, 5, 8, 10}, and index values included in the second set are {0, 2, 8}. During measurement, each measurement resource is associated with at least one index value in the first set (an absolute index value, a relative index value, a physical cell ID, or a TRP ID, etc.). In addition, each port of each measurement resource may be associated with one index value in the first set.

In some embodiments, the terminal device may also measure a CSI-RS sent by a TRP in the first set. Index values are associated in reference signal configuration, where a reference signal includes but is not limited to at least one of the following: a DMRS of a current serving PDSCH; a reference signal associated with a current serving beam (a TCI state or a QCL parameter); an RS in a specific reference signal set (such as configured by a higher-layer parameter); a periodic CSI-RS, an aperiodic CSI-RS, and a semi-persistent CSI-RS sent by all TRPs; or SSBs sent by all TRPs. A method for carrying an index value in the DMRS of the PDSCH includes but is not limited to at least one of the following: an index value is carried in a sequence configured by a higher-layer parameter. When the DMRS of the PDSCH is configured, one antenna port or one CDM group of the DMRS may be configured with one sequence initialization parameter, and each parameter may be associated with an index value. For example, a specific configuration is as follows:

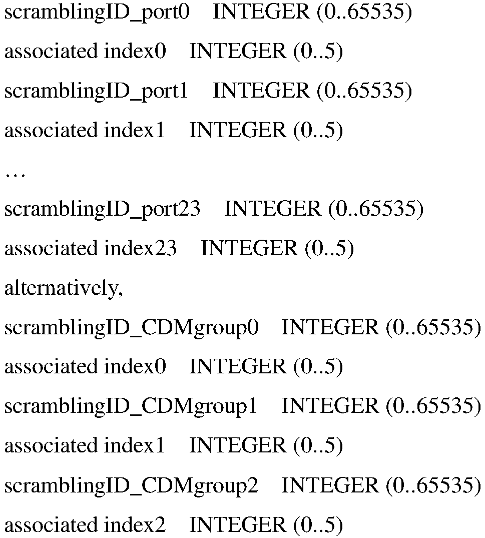

An index value is dynamically indicated in DCI signaling. Different from higher-layer parameter configuration, the index value associated with each DMRS port or CDM group of the DMRS may be dynamically changed through the DCI signaling. For example, a new DCI information field may be used to indicate an index value associated with each CDM group. For example, an antenna port indication field indicates a total of two CDM groups, and an index value indication field indicates that the two indicated CDM groups are associated with index value 3 and index value 2, respectively. The antenna port indication field and the index value indication field need to be interpreted jointly, and the two information fields may also be encoded jointly.

An index value is associated in a beam state of the DMRS of the PDSCH. Since it is necessary to indicate a corresponding beam (such as a TCI state or other beam indication methods) for the DMRS of the PDSCH, the index value corresponding to the DMRS of the PDSCH may be changed through beam indication. For example, each TCI state is associated with one index value (associated through higher-layer parameter configuration). Alternatively, while a TCI state is indicated, a same information field or another information field is further used to indicate an index value respectively corresponding to one or more TCI states.

In some embodiments, the terminal device measures a reference signal within a certain time range (time window) to determine whether to perform TRP switching. For example, a reference signal which is spaced by S symbols, time slots, or other time units from a scheduled PDSCH (or PDSCH DMRS) may be a reference signal within S time units before the PDSCH (or the PDSCH DMRS), or S time units after the PDSCH (or the PDSCH DMRS).

In some embodiments, the network device configures, for the terminal device, power offsets between respective reference signals and a specific reference signal (such as a PDSCH DMRS), so that the terminal device can eliminate the impact of transmit power. For example, a transmit power of a certain CSI-RS is K times (such as XdB) a transmit power of the PDSCH DMRS, the terminal device, when comparing an SINR of the PDSCH DMRS and that of the CSI-RS, needs to subtract XdB from the SINR corresponding to the CSI-RS, and then compares it with the SINR of the PDSCH DMRS, to determine which reference signal corresponds to a better SINR. In this way, the calculated value is more accurate. During measurement, the terminal device may measure multiple reference signals corresponding to one TRP or one cell. For example, for RS 3 and RS 5 corresponding to a cell index value, a TRP index value, or index value 3, whether there is a better beam for the cell or the TRP is determined. Alternatively, the terminal device may measure reference signals corresponding to different cells or TRPs to determine whether it is necessary to replace the serving cell or the serving TRP.

Step 2: the terminal device determines whether to switch a TRP or a reference signal according the measurement result. The terminal device determines to switch the TRP or the reference signal when the measurement result satisfies at least one of the following conditions: at least one measurement metric (such as an L1-RSRP, an L1-SINR, a CQI (SINR), an SLNR) of at least one reference signal is superior to a measurement metric corresponding to a current PDSCH DMRS (or a reference signal associated with a current TCI state); a joint measurement metric (such as an L1-RSRP, an L1-SINR, a CQI (SINR), an SLNR) of at least one reference signal and a PDSCH DMRS (or the reference signal associated with the current TCI state) is superior to a measurement metric corresponding to the current PDSCH DMRS (or the reference signal associated with the current TCI state), for example, taking the CQI (SINR) as the measurement metric of the measurement, when CSI-RS ID 5 has 32 ports and if the PDSCH DMRS has 8 layers, a potential precoding matrix (assumed to correspond to 4 layers) may be calculated according to the CSI-RS ID 5, and a CQI (SINR) corresponding to 4-stream transmission (assuming that a TRP corresponding to the CSI-RS ID 5 and a current serving TRP perform CJT transmission), 8-stream transmission (assuming that the TRP corresponding to the CSI-RS ID 5 and the current serving TRP perform 4-stream CJT transmission, and the current serving TRP performs 4-stream transmission), or 12-stream transmission (assuming that the TRP corresponding to the CSI-RS ID 5 and the current serving TRP perform NCJT transmission) may be jointly determined according to channel information corresponding to the CSI-RS ID 5, the calculated precoding matrix, and the current PDSCH DMRS, and if at least one transmission assumption yields a better CQI than that of the current PDSCH DMRS transmission, the terminal device determines to switch the serving/cooperative TRP or the reference signal; a difference between at least one measurement metric (such as an L1-RSRP, an L1-SINR, a CQI (SINR), an SLNR) of at least one reference signal and the measurement metric corresponding to the current PDSCH DMRS (or the reference signal associated with the current TCI state) is superior to a specific threshold, where the specific threshold may be positive or negative, when a value of the threshold is positive, it indicates that a measurement result of at least one measured reference signal is superior than a measurement result of the reference signal corresponding to the current TRP; and when the value of the threshold is negative, it indicates that the measurement result of the at least one measured reference signal is comparable to the measurement result corresponding to the current TRP, and therefore, a TRP corresponding to the at least one measured reference signal may also be regarded as a cooperative TRP, otherwise severe interference will be introduced; a difference between a joint measurement metric (such as an L1-RSRP, an L1-SINR, a CQI (SINR), an SLNR) of at least one reference signal and the PDSCH DMRS (or the reference signal associated with the current TCI state) and the measurement metric corresponding to the current PDSCH DMRS (or the reference signal associated with the current TCI state) is superior to a specific threshold; the measurement metric corresponding to the current PDSCH DMRS (or the reference signal associated with the current TCI state) is inferior to a specific threshold; at least one measurement metric (such as leaked interference) of at least one reference signal is inferior to a specific threshold, and in this case, the reference signal may perform joint transmission with a current cooperative TRP without causing more interference leakage to other users.

In some embodiments, whether to switch the TRP or the reference signal is determined according to whether the measurement result satisfies the first condition. To avoid inaccuracy of a single measurement result or prevent the ping-pong effect, the terminal device may determine to switch the TRP or the reference signal after a measurement metric is pre-determined to satisfy the condition for K times (e.g., 5 times, 10 times). The ping-pong effect refers to the terminal device frequently switching an accessed TRP between two TRPs when the signal strengths of the two TRPs change drastically.

It should be noted that the present disclosure does not limit the specific types of the foregoing conditions.

Step 3: if the terminal device determines to switch the TRP or the reference signal, it sends a switching notification or a switching request to the network device. In some embodiments, a signal or a channel used by the terminal device to send the switching notification or the switching request includes but is not limited to at least one of the following: a PRACH channel, a scheduling request (SR), an MAC-CE signaling, or a cell specific physical uplink shared channel CG PUSCH. The information carried by the channel or the signal includes first information and/or second information.

Specifically, the first information includes but is not limited to at least one of the following: an index value that needs to be replaced, i.e., a current index value, or an index value corresponding to a new TRP, i.e., a target index value. For example, there are currently two TRPs serving the terminal device, namely index value 0 and index value 4. The transmission quality of the TRP corresponding to the index value 0 meets a basic requirement and continues to serve the terminal device, while the quality of the TRP corresponding to the index value 4 deteriorates and no longer serves the terminal device. Then the terminal device indicates to remove the index value 4, that is, a reference signal corresponding to the index value 4 will no longer serve the terminal device. Currently, the terminal device is served by the index value 0 and the index value 4. Through measurement, the terminal determines to be served by TRPs corresponding to index value 4 and index value 5. Therefore, the terminal may report the index value 4 and the index value 5 to the network device, notifying/requesting the network side to use the index value 4 and the index value 5 to serve the terminal device. The second information includes but is not limited to at least one of the following: a new transmission mode (such as CJT, DPS, NCJT, CJT+NCJT, etc.); the number of streams corresponding to the new transmission mode (1-4 streams are used for CJT transmission, and 5-8 are used streams for DPS transmission); a transmission mode corresponding to the number of streams (for example, CJT transmission is performed for 1-4 streams and DPS transmission is performed for 5-8 streams); an index value corresponding to the number of streams (for example, TRPs corresponding to index value 3 and index value 2 are used for transmission of 1-4 streams, and the TRP corresponding to the index value 3 is used for transmission of 5-8 streams); an index value corresponding to the transmission mode (for example, TRPs corresponding to index value 0 and index value 4 are used for CJT transmission); or an event that triggers the terminal device to initiate a TRP switching notification or switching request.

Step 4: after a preset duration from receiving the switching notification or the switching request, the network device performs switching or sends the switching notification to a target TRP. After the network device completes the switching or finishes sending the switching notification to the target TRP, it may or may not send response information to the terminal device. If the terminal device expects a TRP index value or a cell index value to be carried in a PDSCH DMRS, and after T time units, or between T time units and T1 time units, a TRP index value or a cell index value carried in the PUSCH DMRS (or a reference signal associated with a TCI state of a PDSCH) received by the terminal device is not the one transmitted by the terminal device, the terminal device sends the switching notification or the switching request again through step 3, to ensure the accuracy of the switching.

In some embodiments, a method for sending the response information includes but is not limited to at least one of the following: the network device sending an ACK to the terminal device; the network device sending a response MAC-CE to the terminal device, which includes specific information such as a replaced index value or an agreed HARQ process number; the network device sending DCI signaling scrambled with a specific RNTI (value) to the terminal device; the network devices sending DCI signaling to the terminal device in a specific search space (or control resource set); or the network device scheduling PUSCH for transmission by using the same HARQ process number as that used by the terminal device for sending a notification/request, but with a new data indicator field flipped.

If the network device fails to execute the switching notification or the switching request, the network device sends response information. In some embodiments, if the network device fails to execute the switching notification or the switching request, the network device indicates, through the response information, that a target TRP fails to provide a communication service. The network device specifies a TRP (or an index value) that cannot serve the terminal device through the response information, for example, a cell index value or a TRP index value or an index value that cannot provide a service is carried in DCI, or an index value that cannot provide a service is carried in MAC-CE, etc.

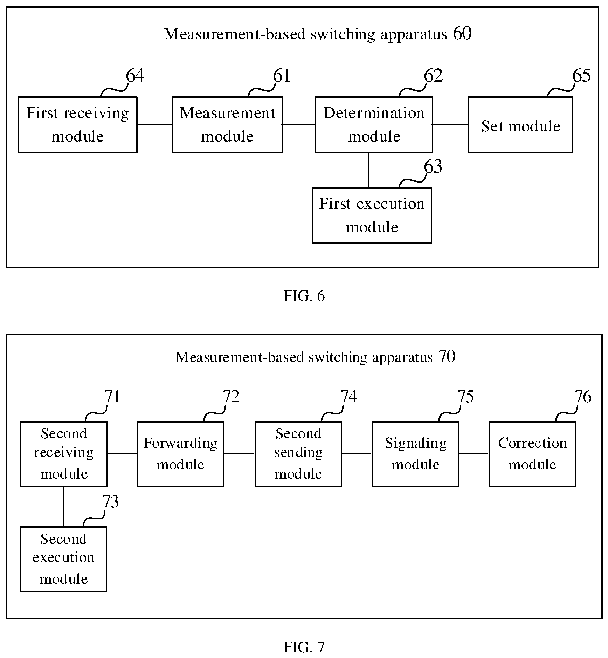

FIG. 6 is a structural schematic diagram of a measurement-based switching apparatus provided by an embodiment of the present disclosure. As shown in FIG. 6, the measurement-based switching apparatus 60 may include: a measurement module 61, a determination module 62, a first execution module 63, a first receiving module 64, and a set module 65.

The measurement module 61 is configured to perform measurement according to a reference signal to obtain a measurement result, where the reference signal is associated with first information, and the first information is used to identify a source of the reference signal.

The determination module 62 is configured to send target content, where the target content includes at least one of: the measurement result, a switching notification, or a sent switching request; where the switching notification includes the first information, and the switching request includes the first information.

It should be noted that the measurement-based switching apparatus shown in the embodiment of the present disclosure can execute the technical solutions shown in the foregoing method embodiments. Implementation principles and beneficial effects thereof are similar, which will not be repeated here.

In a possible implementation, the determination module 62 is specifically configured to:
determine whether the measurement result satisfies a first condition; and
send the switching notification or the switching request if the measurement result satisfies the first condition;
where the first condition is at least one of: a measurement metric of a target reference signal being greater than a measurement metric of a current reference signal, or the measurement metric of the target reference signal falling within a first range, or a difference between the measurement metric of the target reference signal and the measurement metric of the current reference signal falling within a second range.

The first execution module 63 is configured to:
determine a target index value according to the first information, and receive a signal associated with the target index value; and/or, determine a target transmission mode according to second information, and receive a signal from the source of the reference signal through the target transmission mode, where the second information is used to identify the target transmission mode.

In a possible implementation, the reference signal includes at least one of the following: a demodulation reference signal (DMRS) of a physical uplink shared channel (PDSCH), a channel state information reference signal (CSI-RS), or a synchronization signal block SSB; and the first receiving module 64 is configured to determine the first information associated with the reference signal according to a configuration of the reference signal.

In a possible implementation, a method of indicating the first information by the DMRS of the PDSCH includes at least one of the following: indicating the first information by a sequence configured by a higher-layer parameter; indicating the first information through downlink control information DCI; or indicating the first information by a beam state of the DMRS of the PDSCH.

The set module 65 is configured to determine a first set, where the first set includes a plurality of reference signals; and the set module is further configured to perform measurement on the plurality of reference signals in the first set, respectively, to determine a target reference signal.

In a possible implementation, the measurement module 61 is specifically configured to:
perform measurement according to the reference signal within a target time window to obtain the measurement result.

In a possible implementation, the measurement module 61 is specifically configured to:
determine a power offset value; and
perform measurement according to the reference signal and the power offset value to obtain the measurement result.

In a possible implementation, the switching notification or the switching request further includes second information, the second information being used to identify a target transmission mode, and the second information includes at least one of: the target transmission mode; a correspondence between the target transmission mode and the number of streams; a correspondence between a target index value and the number of streams; or a correspondence between the target index value and the target transmission mode.

In a possible implementation, the first information includes at least one of: a current index value or the target index value, the current index value being used to identify a source of the current reference signal, and the target index value being used to identify a source of the target reference signal.

In a possible implementation, the target transmission mode includes at least one of: coherent joint transmission (CJT), spatial division multiplexing transmission (SDM), time division multiplexing transmission (TDM), frequency division multiplexing transmission (FDM), single frequency network transmission (SFN), or dynamic point selection (DPS).

FIG. 7 is a structural schematic diagram of a measurement-based switching apparatus provided by an embodiment of the present disclosure. The measurement-based switching apparatus 70 includes: a second receiving module 71, a forwarding module 72, a second execution module 73, a second sending module 74, a signaling module 75, and a correction module 76.

The second receiving module 71 is configured to receive target content, where the target content includes at least one of the following: a measurement result, a switching notification, or a switching request.

The forwarding module 72 is configured to determine a target access device associated with a target index value according to first information and/or second information; and the forwarding module 72 is further configured to send the switching notification to the target access device.

In a possible implementation, the first information includes at least one of: a current index value or a target index value, the current index value being used to identify a source of the current reference signal, and the target index value being used to identify a source of the target reference signal; and the second information includes a current transmission mode and at least one of the following: a target transmission mode; a correspondence between the target transmission mode and the number of streams; a correspondence between the target index value and the number of streams; or a correspondence between the target index value and the target transmission mode.

In a possible implementation, the forwarding module 72 is further configured to determine the first access device corresponding to the target transmission mode; and the forwarding module is further configured to send the switching notification to the first access device.

The second execution module 73 is configured to determine the target access device associated with the target index value according to the first information and/or the second information; and the second execution module 73 is further configured to perform switching.

In a possible implementation, the second execution module 73 is further configured to:
determine the first access device associated with the target transmission mode; and
perform switching to execute a communication service for the terminal device through the target transmission mode.

In a possible implementation, the target transmission mode includes at least one of the following: coherent joint transmission (CJT), spatial division multiplexing transmission (SDM), time division multiplexing transmission (TDM), frequency division multiplexing transmission (FDM), single frequency network transmission (SFN), or dynamic point selection (DPS).

The second sending module 74 is configured to send response information, where the response information indicates that the network device has received the measurement result.

The signaling module 75 is configured to send the response information via signaling, where the signaling includes at least one of the following: acknowledgment (ACK) signaling, medium access control-control element (MAC-CE) signaling, or downlink control information (DCI) signaling.

The correction module 76 is configured to send a power offset value, where the power offset value is used to correct a measurement error.

It should be noted that the division of modules in the embodiments of the present disclosure is illustrative and merely a logical function division. In actual implementation, another division method may be adopted. In addition, modules in respective embodiments of the present disclosure may be integrated into one processing unit, or each unit may exist physically independently, or two or more modules may be integrated into one unit. The integrated module may be implemented in the form of a hardware unit or a software functional unit.

If the integrated module is implemented in the form of a software functional unit and sold or used as an independent product, it may be stored in a processor-readable storage medium. Based on such understanding, the technical solution of the present disclosure, essentially or the parts contributing to the related art, or all or part of the technical solutions may be embodied in the form of a software product. The computer software product is stored in a storage medium and includes several instructions to enable a computer device (which may be a personal computer, a server, or a network device, etc.) or a processor (processor) to execute all or part of the steps of the methods in the various embodiments of the disclosure.

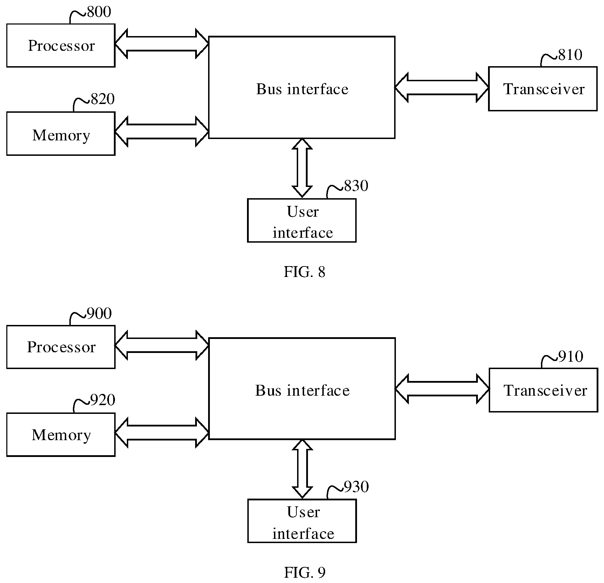

An embodiment of the present disclosure provides a measurement-based switching apparatus applied to a terminal device. FIG. 8 is a structural schematic diagram of the measurement-based switching apparatus provided by the embodiment of the present disclosure. As shown in FIG. 8, the measurement-based switching apparatus includes: a transceiver 810, a processor 800, and a memory 820.

The transceiver 810 is configured to receive and send data under control of the processor 800.

In FIG. 8, a bus architecture may include any number of interconnected buses and bridges, specifically linking various circuits of one or more processors represented by the processor 800 and a memory represented by the memory 820. The bus architecture may also link various other circuits such as a peripheral device, a voltage regulator, and a power management circuit together, which are well-known in the art and thus will not be further described herein. A bus interface provides an interface. The transceiver 810 may be multiple elements, including a transmitter and a receiver, providing a unit for communicating with various other apparatuses over transmission media, including a wireless channel, a wired channel, an optical cable, and other transmission media. The processor 800 is responsible for managing the bus architecture and general processing. The memory 820 may store the data used by the processor 800 during execution.

The processor 800 may be a central processing unit (CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD). The processor 800 may also adopt a multi-core architecture.

An embodiment of the present disclosure provides a measurement-based switching apparatus applied to a network device. FIG. 9 is a structural schematic diagram of the measurement-based switching apparatus provided by the embodiment of the present disclosure. As shown in FIG. 9, the measurement-based switching apparatus includes: a transceiver 910, a processor 900, and a memory 920.

The transceiver 910 is configured to receive and send data under control of the processor 900.

In FIG. 9, a bus architecture may include any number of interconnected buses and bridges, specifically linking various circuits of one or more processors represented by the processor 900 and a memory represented by the memory 920. The bus architecture may also link various other circuits such as a peripheral device, a voltage regulator, and a power management circuit together, which are well-known in the art and thus will not be further described herein. A bus interface provides an interface. The transceiver 910 may be multiple elements, including a transmitter and a receiver, and providing a unit for communicating with various other apparatuses over transmission media, including a wireless channel, a wired channel, an optical cable, and other transmission media. For different user devices, a user interface may also be an interface capable of externally and internally connecting required device, including but not limited to a keyboard, a display, a speaker, a microphone, a joystick, etc.

The processor 900 is responsible for managing the bus architecture and general processing. The memory 920 may store the data used by the processor 900 during execution.

In some embodiments, the processor 900 may be a CPU (central processing unit), an ASIC (Application Specific Integrated Circuit, application specific integrated circuit), an FPGA (Field-Programmable Gate Array, field-programmable gate array), or a CPLD (Complex Programmable Logic Device, complex programmable logic device). The processor may also adopt a multi-core architecture.

The processor 900 is configured to execute any method provided by the embodiments of the present disclosure according to the obtained executable instructions by calling a program stored in the memory. The processor 900 and the memory 920 may also be physically disposed separately.

It should be noted that the above apparatuses provided by the embodiments of the present disclosure can achieve all the method steps implemented in the above method embodiments, and can achieve the same technical effects. Detailed descriptions of the same contents and beneficial effects in these embodiments as those of the method embodiments are not be repeated here.

The processor-readable storage medium may be any available medium or data storage device accessible to a processor, including but not limited to: a magnetic memory (such as a floppy disk, a hard disk, a magnetic tape, a magneto-optical disc (MO), etc.), an optical memory (such as a CD, a DVD, a BD, a HVD, etc.), and a semiconductor memory (such as an ROM, an EPROM, an EEPROM, a non-volatile memory (Non-Volatile Memory), a solid state drive (SSD)), etc.

The person skilled in the art should understand that the embodiments of the present disclosure may be provided as a method, a system, or a computer program product. Therefore, the present disclosure may adopt the form of a fully hardware embodiment, a fully software embodiment, or an embodiment combining software and hardware aspects. Furthermore, the present disclosure may take the form of a computer program product implemented on one or more computer-readable storage media (including but not limited to a disk memory, an optical memory, etc.) including computer-usable program codes.

The present disclosure is described with reference to the flowcharts and/or block diagrams of the methods, devices (systems), and computer program products according to the embodiments of the present disclosure. It should be understood that each process and/or block in the flowcharts and/or block diagrams, as well as combinations of processes and/or blocks in the flowcharts and/or block diagrams, may be implemented by computer-executable instructions. These computer-executable instructions may be provided to a processor of a general-purpose computer, a special-purpose computer, an embedded processor, or other programmable data processing device to generate a machine, so that the instructions executed by the processor of the computer or other programmable data processing apparatuses create means for implementing the functions specified in one or more processes of the flowcharts and/or one or more blocks of the block diagrams.

These processor-executable instructions may also be stored in a processor-readable memory capable of directing a computer or other programmable data processing devices to operate in a specific manner, so that the instructions stored in the processor-readable memory generate a manufactured product including instruction means that implement the functions specified in one or more processes of the flowcharts and/or one or more blocks of the block diagrams.

Apparently, various modifications and variations may be made to the present disclosure by the persons skilled in the art without departing from the spirit and scope of the present disclosure. In this way, if such modifications and variations of the present disclosure fall within the scope of the claims of the present disclosure and their equivalents, the present disclosure is also intended to include these modifications and variations.

## Claims

1. A measurement-based switching method, **characterized by** being applied to a terminal, and comprising:
performing measurement according to a reference signal to obtain a measurement result, wherein the reference signal is associated with first information, and the first information is used to identify a source of the reference signal; and
sending target content, wherein the target content comprises at least one of: the measurement result, a switching notification, or a switching request; wherein the switching notification comprises the first information, and the switching request comprises the first information.

2. The method according to claim 1, further comprising:
determining whether the measurement result satisfies a first condition; and
sending the switching notification or the switching request if the measurement result satisfies the first condition;
wherein the first condition is at least one of: a measurement metric of a target reference signal being greater than a measurement metric of a current reference signal, or the measurement metric of the target reference signal falling within a first range, or a difference between the measurement metric of the target reference signal and the measurement metric of the current reference signal falling within a second range.

3. The method according to claim 1 or 2, further comprising:
determining a target index value according to the first information, and receiving a signal associated with the target index value.

4. The method according to any one of claims 1 to 3, wherein the reference signal comprises at least one of: a demodulation reference signal, DMRS, of a physical downlink shared channel, PDSCH, a channel state information reference signal, CSI-RS, or a synchronization signal block, SSB; and the method further comprises:
determining the first information associated with the reference signal according to a configuration of the reference signal.

5. The method according to claim 4, wherein a method of indicating the first information by the DMRS of the PDSCH comprises at least one of:
indicating the first information by a sequence configured through a higher-layer parameter;
indicating the first information by downlink control information, DCI; or
indicating the first information by a beam state of the DMRS of the PDSCH.

6. The method according to any one of claims 1 to 5, further comprising:
determining a first set, wherein the first set comprises a plurality of reference signals; and
performing measurement on the plurality of reference signals in the first set, respectively, to determine a target reference signal.

7. The method according to claim 1, wherein the performing measurement according to the reference signal to obtain the measurement result comprises:
performing measurement according to the reference signal within a target time window to obtain the measurement result.

8. The method according to claim 1, wherein the performing measurement according to the reference signal to obtain the measurement result comprises:
determining a power offset value; and
performing measurement according to the reference signal and the power offset value to obtain the measurement result.

9. The method according to any one of claims 1 to 8, wherein the switching notification or the switching request further comprises second information, the second information being used to identify a target transmission mode, and the second information comprises at least one of:
the target transmission mode;
a correspondence between the target transmission mode and the number of streams;
a correspondence between a target index value and the number of stream; or
a correspondence between the target index value and the target transmission mode.

10. The method according to claim 9, wherein the first information comprises at least one of: a current index value or the target index value, the current index value being used to identify a source of the current reference signal, and the target index value being used to identify a source of the target reference signal.

11. The method according to claim 10, wherein the target transmission mode comprises at least one of: coherent joint transmission, CJT, space division multiplexing transmission, SDM, time division multiplexing transmission, TDM, frequency division multiplexing transmission, FDM, single frequency network transmission, SFN, or dynamic point selection, DPS.

12. A measurement-based switching method, **characterized by** being applied to a network device, and comprising:
receiving target content, wherein the target content comprises at least one of: a measurement result, a switching notification, or a switching request.

13. The method according to claim 12, wherein the switching notification comprises first information and/or second information; and the method further comprises:
determining a target access device associated with the target index value according to the first information and/or the second information; and
sending the switching notification to the target access device.

14. The method according to claim 13, wherein the first information comprises at least one of: a current index value or the target index value, the current index value being used to identify a source of the current reference signal, and the target index value being used to identify a source of the target reference signal; and
the second information comprises a current transmission mode and at least one of:
a target transmission mode;
a correspondence between the target transmission mode and the number of streams;
a correspondence between the target index value and the number of streams; or
a correspondence between the target index value and the target transmission mode.

15. The method according to claim 14, further comprising:
determining a first access device associated with the target transmission mode; and
sending the switching notification to the first access device.

16. The method according to claim 12, wherein the switching request comprises first information and/or second information; and the method further comprises:
determining a target access device associated with the target index value according to the first information and/or the second information; and
performing switching.

17. The method according to claim 16, further comprising:
determining a first access device associated with a target transmission mode; and
performing switching to execute a communication service for a terminal device via the target transmission mode.

18. The method according to claim 17, wherein the target transmission mode comprises at least one of: coherent joint transmission, CJT, space division multiplexing transmission, SDM, time division multiplexing transmission, TDM, frequency division multiplexing transmission, FDM, single frequency network transmission, SFN, or dynamic point selection, DPS.

19. The method according to claim 12, further comprising:
sending response information, wherein the response information indicates that the network device has received the measurement result.

20. The method according to any one of claims 12 to 19, further comprising:
sending response information via signaling, wherein the signaling comprises at least one of: acknowledgment, ACK, signaling, medium access control-control element, MAC-CE, signaling, or downlink control information, DCI, signaling.

21. The method according to any one of claims 12 to 20, further comprising:
sending a power offset value, wherein the power offset value is used to correct a measurement error.

22. A measurement-based switching apparatus, **characterized by** comprising:
a measurement module, configured to perform measurement according to a reference signal to obtain a measurement result, wherein the reference signal is associated with first information, and the first information is used to identify a source of the reference signal; and
a determination module, configured to send target content, wherein the target content comprises at least one of: the measurement result, a switching notification, or a switching request; wherein the switching notification comprises the first information, and the switching request comprises the first information.

23. A measurement-based switching apparatus, **characterized by** comprising:
a second receiving module, configured to receive target content, wherein the target content comprises at least one of: a measurement result, a switching notification, or a switching request.

24. A measurement-based switching apparatus, **characterized by** comprising a memory, a transceiver, and a processor:
wherein the memory is configured to store a computer program; the transceiver is configured to receive and send data under control of the processor; and the processor is configured to read the computer program from the memory and execute following operations:
performing measurement according to a reference signal to obtain a measurement result, wherein the reference signal is associated with first information, and the first information is used to identify a source of the reference signal; and
sending target content, wherein the target content comprises at least one of: the measurement result, a switching notification, or a switching request; wherein the switching notification comprises the first information, and the switching request comprises the first information.

25. The apparatus according to claim 24, wherein the processor is configured to:
determine whether the measurement result satisfies a first condition; and
send the switching notification or the switching request if the measurement result satisfies the first condition;
wherein the first condition is at least one of: a measurement metric of a target reference signal being greater than a measurement metric of a current reference signal, or the measurement metric of the target reference signal falling within a first range, or a difference between the measurement metric of the target reference signal and the measurement metric of the current reference signal falling within a second range.

26. A measurement-based switching apparatus, **characterized by** comprising a memory, a transceiver, and a processor:
wherein the memory is configured to store a computer program; the transceiver is configured to receive and send data under control of the processor; and the processor is configured to read the computer program from the memory and execute following operations:
receiving target content, wherein the target content comprises at least one of: a measurement result, a switching notification, or a switching request.

27. A non-transitory readable storage medium, **characterized in that** the non-transitory readable storage medium stores a computer program used for causing a processor to execute the method according to any one of claims 1 to 21.
